# EUROPÄISCHE PATENTSCHRIFT

(11) **EP 0 801 245 B1**
(45) Veröffentlichungstag und Bekanntmachung des Hinweises auf die Patenterteilung: **28.11.2001**
(21) Anmeldenummer: 97103678.5
(22) Anmeldetag: 06.03.1997
(51) Int. Cl.: F16D 33/18, F16H 41/30

(54) **Hydrodynamische Kupplung**
Hydrodynamic coupling
Accouplement hydrodynamique

(30) Priorität: 12.04.1996 DE 19614590
(43) Veröffentlichungstag der Anmeldung: 15.10.1997
(73) Patentinhaber: Voith Turbo GmbH & Co. KG, 89522 Heidenheim (DE)
(72) Erfinder: Adleff, Kurt, 74564 Crailsheim (DE); Schüttler, Günter, 74599 Wallhausen (DE); Hercher, Gerd-Peter, 74579 Fichtenau-III (DE); Tietz, Maik, 74564 Crailsheim (DE)
(74) Vertreter: Dr. Weitzel & Partner

(56) Entgegenhaltungen:
- DE-A- 19 614 590
- DE-B- 1 196 027
- FR-A- 1 335 281
- US-A- 2 679 728
- US-A- 3 026 679

## Beschreibung

Die Erfindung betrifft eine hydrodynamische Kupplung mit einem Pumpenrad und einem Turbinenrad, die beide einen torusförmigen Arbeitsraum miteinander bilden.

Kupplungen dieser Art können entweder geregelt oder ungeregelt sein. Im vorliegenden Falle geht es um ungeregelte Kupplungen.

US 4 350 011 zeigt und beschreibt eine Kupplung mit einem Gehäuse, das in seinem unteren Teil einen Sammelbehälter für einen Sumpf des Betriebsmittels umfaßt, im allgemeinen Öl. Das Gehäuse umfaßt ferner einen Hochbehälter, in den Flüssigkeit aus dem Sumpf gefördert wird. Weiterhin weist diese Kupplung eine Schleuderscheibe auf, die in den Sumpf eintaucht und die Flüssigkeit auf das Niveau des Hochbehälters anhebt. Am Außen- und Innendurchmesser des Arbeitskreislaufes sind Austrittsbohrungen vorgesehen, um ständig eine gewisse Menge der Betriebsflüssigkeit aus dem Arbeitsraum zu entlassen und zum Zwecke der Kühlung umzuwälzen.

Da sich die Temperatur des Betriebsmittels während des Betriebes erhöht, muß unbedingt für eine ordentliche Kühlung gesorgt werden. Häufig wird das Betriebsmittel zum Zwecke der Kühlung aus der Kupplung herausgeführt, durch einen Wärmetauscher hindurchgeführt, und wieder in die Kupplung zurückgeführt,

US 2,679,728 zeigt ein hydraulisches Getriebe, dessen Getriebeglieder und dessen Arbeitsmediumsexpansionsspeicher mittels eines Kühlluftsystems gekühlt werden. Die Kühlluft überstreicht dabei die Außenfläche des angetriebenen Rotors im Bereich seiner Beschaufelung, nachdem sie zuvor durch einen Einlaßkanal geleitet wurde, und dabei Wärme aus der Expansionsspeicher abgeführt hat.

Der Erfindung liegt die Aufgabe zugrunde, eine hydrodynamische Kupplung derart zu gestalten, daß der zum Kühlen erforderliche Aufwand drastisch verringert wird. Diese Aufgabe wird durch die Merkmale von Anspruch 1 gelöst.

Damit wird eine Kupplung beschrieben, die ohne externe Wärmetauscher auskommt und die Kupplung ist derart gestaltet, daß sie durch Aufstecken mit einem Antriebsmotor verbunden werden kann. Das Kupplungsgehäuse ist allseitig geschlossen. Es ist durch entsprechende Ventilationsöffnungen auf natürliche Weise belüftbar, so daß eine anderweitige Kühlung des Betriebsmittel nicht mehr notwendig ist. Gemäß der Erfindung erfolgt die Wärmeabfuhr über die Oberfläche des Pumpenrades und der Schale.

Die Erfindung ist anhand der Zeichnungen näher erläutert.
Darin ist im einzelnen folgendes dargestellt:
Figur 1 zeigt eine hydrodynamische Kupplung in einer Gesamtansicht in einem achssenkrechten Querschnitt,
Figur 2 zeigt eine hydrodynamische Kupplung wiederum in einem achssenkrechten Schnitt; hierbei sind die erfindungswesentlichen Teile besser erkennbar.

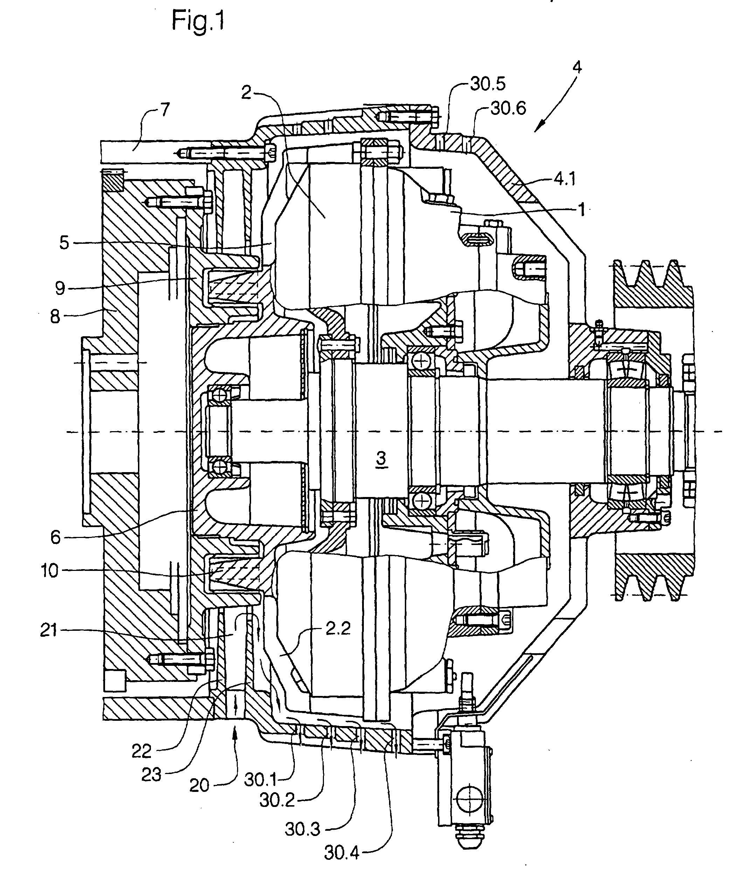

In Figur 1 erkennt man ein Pumpenrad 1, ein Turbinenrad 2, eine Welle 3, ein Gehäuse 4, eine vom Pumpenrad 1 getragene Schale 5 sowie eine von der Schale 5 getragen Wange 6 als wesentlichen Teile der Kupplung. Das Kupplungsgehäuse 4 ist mit dem Gehäuse 7 eines hier nicht dargestellten Motors verschraubt. Außerdem ist es mittels einer Steckverbindung mit einer Schwungscheibe 8 verbunden. Die Schwungscheibe 8 ist mit einem Kupplungsflansch 9 verschraubt. Dieser ist über Mitnehmer 10 mit der Schale 5 und damit mit dem Pumpenrad 1 drehfest verbunden.

Das Turbinenrad ist mit der Welle 3 drehfest verbunden und trägt an seinem rechten Ende eine Riemenscheibe 11.

Vom Motor wird Drehmoment in die Schwungscheibe 8 eingeleitet, von dort zum Kupplungsflansch 9, dann über die Mitnehmer 10 zur Schale 5 und damit zum Kupplungsrad 1. Vom Kupplungsrad 1 erfolgt die Drehmomentübertragung hydraulisch über das im Arbeitsraum befindliche Öl zum Turbinenrad 2, von dort zur Welle 3 und weiter zur Riemenscheibe 11.

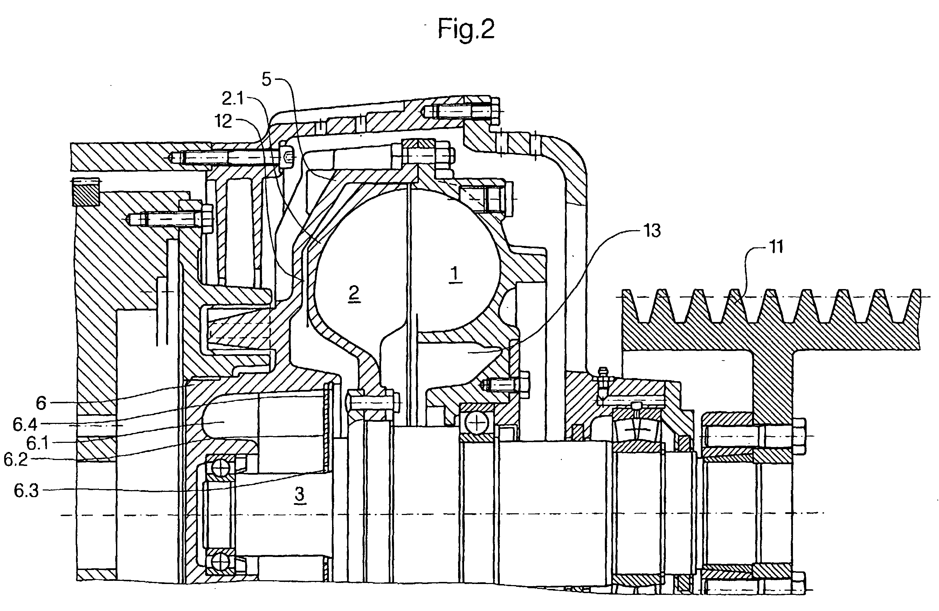

Die entscheidenden Teile sind aus Figur 2 erkennbar. Pumpenrad 1 und Turbinenrad 2 weisen Schaufeln auf, die hier nicht näher bezeichnet sind. Der beschaufelte Raum ist der Arbeitsraum der Kupplung. Zwischen der Umfangswand 2.1 des Turbinenrades und der Schale 5 ist ein Ringspalt 12 gebildet. Dieser hat einen relativ kleinen Querschnitt. Er steht mit einem Stauraum 6.1 in leitender Verbindung, der von der Wange 6 umschlossen ist. Der Stauraum 6.1 ist durch eine ringförmige Drosselscheibe 6.2 begrenzt. Zwischen dem inneren Umfang der Drosselscheibe 6.2 und der Welle 3 ist ein Ringspalt 6.3 vorgesehen. Am äußeren Umfang der Drosselscheibe 6.2 sind Bohrungen 6.4 vorgesehen.

Befindet sich die Kupplung außer Betrieb, so sammelt sich der größte Teil des Öles im Stauraum 6.1 an, in den es durch den Ringspalt 6.3 gelangt.

Wird die Kupplung angefahren, so wird zunächst mechanisch Drehmoment auf das Pumpenrad 1 übertragen. Da der Arbeitsraum zu diesem Zeitpunkt von Öl jedoch weitgehend frei ist, kommt es auch nicht zu einem Antrieb des Turbinenrades. Es bildet sich aber ein Ölring im Stauraum aus, der sich an der radial äußeren Mantelfläche anlegt. Aus diesem Ölring gelangt durch die Bohrungen 6.4 Öl nach und nach durch den Ringspalt 12 radial nach außen. Da der Ringspalt 12 an seinem äußeren Umfang mit dem Arbeitsraum kommuniziert, gelangt auf diese Weise Öl auch in den Arbeitsraum.

Es muß betont werden, daß es keine andere leitende Verbindung zwischen dem Stauraum 6.1 und dem Arbeitsraum gibt, als über den Ringspalt 12. Deswegen erfolgt das Befüllen des Arbeitsraumes mit Öl nur sehr langsam und sehr verzögert, weshalb auch das Drehmoment nur sehr sanft vom Pumpenrad auf das Turbinenrad übertragen wird.

Man erkennt einen weiteren Stauraum 13 radial zwischen Pumpenrad 1 und der Welle 3. Dieser Hilfs-Stauraum kann vorhanden sein, jedoch ist dies nicht zwingend notwendig.

Es muß betont werden, daß das Öl keine andere Möglichkeit hat, vom Stauraum 6.1 zum Arbeitsraum zu gelangen, als über den Ringspalt 12.

Außer den genannten Vorteilen des besonders sanften Anfahrens hat die erfindungsgemäße Kupplung den Vorzug, daß sie nur einen geringen Bauraum einnimmt.

Gemäß der Erfindung ist das Kupplungsgehäuse 4 mit Lufteintrittsöffnungen 20 sowie mit Luftaustrittsöffnungen 30.1, 30.2, 30.3, 30.4 versehen. Auch der Gehäusedeckel 4.1 ist mit Öffnungen 30.5, 30.6 versehen.

Die Einlaßöffnungen 20 bestehen aus einer Vielzahl von Bohrungen, die um den Umfang des Kupplungsgehäuses 4 herum verteilt angeordnet sind. An die Einlaßöffnungen 20 schließt sich ein Ringkanal 21 an, der aus zwei Ringscheiben 22 und 23 gebildet ist. Die Luft nimmt dabei den durch Pfeile veranschaulichten Weg. Dabei streicht sie am Turbinenrad 2 vorbei. Das Turbinenrad ist auf seiner Rückseite mit Lüfterschaufeln 2.2 versehen. Diese erstrecken sich im wesentlichen in radialer Richtung.

Die Lufteintrittsöffnungen 20 sowie die Luftaustrittsöffnungen 30.1 bis 30.6, oder wenigstens einige dieser Öffnungen, sind zweckmäßigerweise als Langlöcher ausgebildet. Die Längsachse der Langlöcher erstreckt sich dabei in Umfangsrichtung der Kupplung.

Eine entscheidende Erkenntnis der Erfinder besteht darin, daß die beiden Ringscheiben 22, 23 notwendig sind. Dabei übernimmt Ringscheibe 22 eine Abschirmfunktion gegen Luft, die sonst von der Seite her in den Zufuhrkanal 21 einströmen und die Ventilationsluftströmung stören würde.

## Patentansprüche

1. Hydrodynamische Kupplung mit den folgenden Merkmalen:
1.1 ein Pumpenrad (1) und ein Turbinenrad (2) bilden miteinander einen torusförmigen Arbeitsraum;
1.2 es ist ein Kupplungsgehäuse (4) vorgesehen, das das Pumpenrad (1) und das Turbinenrad (2) umschließt und das zum Anschließen an einen Motor gestaltet ist; eine vom Pumpenrad (1) getragene Schale (5) ist mittels einer Steckverbindung mittelbar an dem Motor anschliessbar, zum übertragen des Motordrehmomentes auf die Schale (5);
1.3 das Kupplungsgehäuse (4) weist wenigstens im Bereich des einen der beiden Räder (1, 2) einen Lufteinlaßkanal (21) auf;
1.4 der Lufteinlaßkanal (21) erstreckt sich in radialer Richtung von der Gehäuse-Außenhaut in den vom Gehäuse (4) umschlossenen Innenraum hinein;
1.5 der Lufteinlaßkanal (21) ist durch Ringscheiben (22, 23) begrenzt;
1.6 das Kupplungsgehäuse (4) weist wenigstens im Bereich seiner beiden Räder Luftaustrittsöffnungen (30.1, 30.2, 30.3, 30.4, 30.5, 30.6) auf;
1.7 die Schale (5) weist an ihrer dem Lufteinlaßkanal (21) zugewandten Außenfläche Ventilationsschaufeln (2.2) auf.

2. Kupplung nach Anspruch 1, **dadurch gekennzeichnet, daß** dem Lufteinlaßkanal (21) eine Vielzahl von Öffnungen (20) zugeordnet sind, die über den Umfang des Kupplungsgehäuses (4) verteilt angeordnet sind.

3. Kupplung nach Anspruch 1 oder 2, **dadurch gekennzeichnet, daß** die Austrittsöffnungen (30.1, 30.2, 30.3, 30.4, 30.5, 30.6) im radial äußeren Bereich des Kupplungsgehäuses beziehungsweise Gehäusedeckels (4.1) angeordnet sind.

4. Kupplung nach einem der Ansprüche 1 bis 3, **dadurch gekennzeichnet, daß** wengistens einige der Öffnungen (Lufteinlaßkanal (21) und/oder Luftaustrittsöffnungen (30.1, 30.2, 30.3., 30.4, 30.5, 30.6)) als Langlöcher ausgebildet sind, deren Längsachsen sich in Umfangsrichtung der Kupplung erstrecken.

5. Kupplung nach einem der Ansprüche 1 bis 4, **dadurch gekennzeichnet, daß** die Querschnitte der Lufteinlaßkanäle (21) größer sind als der Querschnitt der Luftauslaßöffnungen zwischen einer das Pumpenrad (2) umgreifenden Schale und der dieser Schale zugewandten Ringscheibe.

## Claims

1. Hydrodynamic coupling with the following features:
1.1 a pump wheel (1) and a turbine wheel (2) together form a torus-shaped working area;
1.2 a coupling housing (4) is provided which surrounds the pump wheel (1) and the turbine wheel (2) and which is designed for connection to a motor; a shell (5) supported by the pump wheel (1) can be directly connected to the motor by a plug-in connection to transmit the motor torque to the shell (5);
1.3 the coupling housing (4) has an air inlet duct (21) at least in the region of one of the two wheels (1, 2);
1.4 the air inlet duct (21) extends in the radial direction from the housing outer skin into the interior enclosed by the housing (4);
1.5 the air inlet duct (21) is limited by annular discs (22, 23);
1.6 the coupling housing (4) has air outlet apertures (30.1, 30.2, 30.3, 30.4, 30.5, 30.6) at least in the region of its two wheels;
1.7 the shell (5) has ventilating blades (2.2) at its outer face facing the air inlet duct (21).

2. Coupling according to claim 1, **characterised in that** a plurality of apertures (20) which are distributed over the periphery of the coupling housing (4) are associated with the air inlet duct (21).

3. Coupling according to claim 1 or 2, **characterised in that** the outlet apertures (30.1, 30.2, 30.3, 30.4, 30.5, 30.6) are arranged in the radially external region of the coupling housing or the housing cover (4.1).

4. Coupling according to one of claims 1 to 3, **characterised in that** at least some of the apertures (air inlet duct (21) and/or air outlet apertures (30.1, 30.2, 30.3, 30.4, 30.5, 30.6)) are designed as slots, the longitudinal axes of which extend in the peripheral direction of the coupling.

5. Coupling according to one of claims 1 to 4, **characterised in that** the cross-sections of the air inlet ducts (21) are greater than the cross-section of the air outlet apertures between a shell encompassing the pump wheel (2) and the annular disc facing this shell.

## Revendications

1. Accouplement hydrodynamique présentant les caractéristiques suivantes :
1.1 une roue de pompe (1) et une roue de turbine (2) définissent ensemble une chambre de travail en forme de tore ;
1.2. il est prévu un carter d'accouplement (4) qui entoure la roue de pompe (1) et la roue de turbine (2) et est conformé en vue de sa liaison avec un moteur ; une coque (5) portée par la roue de pompe (1) peut être liée de manière indirecte au moteur, à l'aide d'une liaison à enfichage, aux fins de transmettre le couple du moteur à la coque (5) ;
1.3. le carter d'accouplement (4), au moins dans la région de l'une des deux roues (1, 2), comporte un canal d'entrée d'air (21);
1.4. le canal d'entrée d'air (21) s'étend dans la direction radiale de la face extérieure du carter jusque dans la chambre intérieure définie par le carter (4) ;
1.5. le canal d'entrée d'air (21) est limité par des plaques annulaires (22, 23);
1.6. le carter d'accouplement (4), au moins dans la région de des deux roues, comporte des orifices de sortie d'air (30.1, 30.2, 30.3, 30.4, 30.5, 30.6).
1.7. la coque (5) est pourvue d'ailettes de ventilation (2.2) sur sa face extérieure tournée vers le canal d'entrée d'air (21).

2. Accouplement selon la revendication 1, **caractérisé en ce qu'**une pluralité d'orifices (20) répartis sur le pourtour du - carter d'accouplement (4) sont associés au canal d'entrée d'air (21)

3. Accouplement selon la revendication 1 ou 2, **caractérisé en ce que** les orifices de sortie d'air (30.1, 30.2, 30.3, 30.4, 30.5, 30.6) sont disposés dans la région radialement extérieure du carter d'accouplement ou du couvercle de carter (4.1)

4. Accouplement selon. une des revendications 1 à 3, **caractérisé en ce qu'**au moins quelques uns des orifices (canal d'entrée d'air (21) / orifices de sortie d'air (30.1, 30.2, 30.3, 30.4, 30.5, 30.6)) sont conformés en trous oblongs, dont les axes longitudinaux s'étendent dans la direction périphérique de l'accouplement.

5. Accouplement selon une des revendications 1 à 4, **caractérisé en ce que** les sections des canaux d'entrée d'air (21) sont supérieures à la section des orifices de sortie d'air entre une coque entourant une roue de pompe (2) et la plaque annulaire tournée vers ladite coque.
